# EUROPEAN PATENT APPLICATION

(11) **EP 1 849 367 A1**
(43) Date of publication of application: **31.10.2007**
(21) Application number: 07380113.6
(22) Date of filing: 24.04.2007
(51) Int. Cl.: A23B 4/16, A23B 4/023, A23L 3/3463

(54) **Composition, application method, and use of a natural additive from soapbark tree extracts to improve the quality of meat products**

(30) Priority: 24.04.2006 CL 200600948
(71) Applicant: Pontificia Universidad Catolica de Chile, Santiago (CL); Fundacion Copec, Santiago (CL); Natural Response Sociedad Anonima, Quilpue (CL); Agricola Don Pollo Limitada, Santiago (CL)
(72) Inventor: Fellenberg Plaza, Maria Angelica, Santiago (CL); Alarcon Camacho, John Gabriel, Santiago (CL); Sainz Lobo, Javier Ignacio, Santiago (CL)
(74) Representative: Gislon, Gabriele

(57) **Abstract**

The composition for favouring the preservation of meat food through an antioxidant effect comprises a barksoap tree extract, preferably from barksoap tree polyphenols and polysaccharides, optionally with a small part of saponins. A liquid form composition comprises a) a concentration of solids between 35 to 45%, b) water between 55 and 65%, c) total phenols between 1.4 and 5.4%, and d) polysacharids between 3.5 and 15.8%. A powder form composition comprises a) total phenols between 4 and 12%, and b) polysacharids between 10 and 35%, with a humidity level lower than 8% weight/weight. The application method for favouring the preservation of meat food through an antioxidant effect comprises applying a barksoap tree extract to a meat product, preferably the extract of barksoap tree polyphenols. The invention also involves the use of a composition based on barksoap tree extract, preferably barksoap tree polyphenols as an antioxidant for a meat food.

## Description

The present invention patent application relates to a composition, method and use of a natural product for favouring the preservation of meat products in general. Specifically, it relates to the composition, application method and use of a natural additive from soapbark tree extracts to improve the quality of meat products, principally useful because of its antioxidant action which favours the long term preservation of meat products in general.

### Previous art

An important deterioration form of food in general, and more specifically, meat products, is the lipoperoxidation phenomenon or fat oxidation, also known as rancidness. These oxidative processes are initiated by certain chemical species (free radicals) that subtract a relatively labile electron from the fatty acid structure triggering the onset of the fat oxidation process. One way to stop or control this process is by applying antioxidants to the meat product. The antioxidants are electron givers that stabilize free radicals and stop or reduce the lipoperoxidative process.

Depending on their origin, there are synthetic and natural antioxidants. The first ones, in spite of having a very good cost/benefit relationship, have the disadvantage of being questioned for having certain carcinogenic characteristics, thus their use is restricted and limited to small doses.

On the other hand, among natural antioxidants there are some vegetable extracts that have the ability to give up electrons. Among these, extracts of rosemary, sage, oregano, some carotenoids, and polyphenols from different vegetal species are found. Even if their natural origin does not guarantee their innocuousness, there is the antecedent of having been largely ingested by the population via infusions or directly as a food additive.

Among meat products, a Broiler chicken is a poultry which has been genetically selected to produce meat in a short time (42 days). One problem related to this kind of meat is the fact that due to the necessary incorporation of unsaturated fatty acids into the poultry diet, these are deposited into the muscles, resulting in meat that is more susceptible to suffering from lipid oxidation once stored. This affects not only the life span of the final product (meat), but it also produces a gradual, nutritional and organoleptic deterioration of poultry meat from the time of slaughtering until the meat is finally consumed. An appropriate cold chain and vacuum packaging are mechanisms that reduce the speed of these processes, but they do not stop them. Indeed, the addition of antioxidants to a substrate susceptible to suffering from oxidation is an effective way to considerably stop or reduce the lipoperoxidation process and to complement the previous palliative measures. There is a possibility of adding synthetic antioxidants to meat, such as Butyl hydroxyanisole (BHA), Butyl hydroxyl toluene (BHT), t-butyl hydroxyquinone (TBHQ) and propyl gallate (PG). However, these are limited by regulations on food additives and, what is more, have been questioned for their innocuousness.

As stated before, some investigation and development (I&D) have been conducted worldwide in order to find natural antioxidants which, when added to food and specially to meat, allow the stopping and reduction of the lipoperoxidatives processes, thus increasing its life span and providing consumers with high quality food. Even if a substance of natural origin may not be understood as a guarantee for innocuousness, there would still be some antecedents on a previous consumption by a population without showing signs of health problems. Such is the case of honey, a substance having reducing sugars, that has been applied as a natural antioxidant in turkey meat, thus decreasing the lipoperoxidation of the treated meat compared to controls (without additives). Additionally, turkey sausages treated with natural antioxidants (vitamin E, galic acid, and rosemary extracts), showed lower radiation induced lipoperoxidation compared to those sausages that were not protected by such antioxidants. In said study, vitamin E and galic acid showed an improved antioxidant effect compared to rosemary extract. The above contrasts with the antioxidant activity of rosemary, coffee, tea and grape seed extracts compared to the synthetic antioxidant BHA in dehydrated chicken meat. In this case, the authors found that rosemary extract had an equivalent behaviour comparable to BHA.

The use of natural antioxidants to improve the nutritive and oxidative quality of chicken meat is an emerging topic and there remains the need for inexpensive sources of polyphenols that can fulfil the needs of this application at an industrial level and in a competitive way.

Among the uses of natural antioxidants we can mention the USA 2004/0234671 invention patent application which discloses a method and a system for processing muscat grape and extracting an antioxidant compound thereof to finally utilize it in certain formulations on several types of food. Additionally, antioxidants from grape extracts have been used for treating beverages and food, as is disclosed by the Japanese Patent JP 2005143377.

On the other hand, the topic on the use of soapbark tree for generating antioxidants useful for preserving food has not been disclosed and it is the objective of this invention. Nevertheless, the Japanese Patent JP 62243681 discloses the possibility of obtaining an antioxidant which comprises one or more extracts of *Quillaja Saponaria Molina* (soapbark tree). However, such disclosure encompasses general information and it does not define its use on food, and even less so on meat products.

Having seen the previous art, there is a need to formulate a natural antioxidant, preferably from an innocuous product and that allows the effective control of the lipoperoxidation phenomenon in meat products. In this sense, the solution approached by the invention proposes a composition that can be formulated as powder or liquid from soapbark tree polyphenols and as will be demonstrated below, it shows a high antioxidant activity.

Specifically, it is an objective of this invention to minimize the phenomenon of oxidative rancidness of meat fat that affects the nutritive and organoleptic quality thereof. The composition is formulated from a soapbark tree extract, which can, preferably but no exclusively, be obtained from an extract rich in saponins and polyphenols. Once saponins are extracted from a permeated of soapbark tree, the remaining is a polyphenol rich fraction that is purified afterwards in order to produce the extract used in the composition of the invention. Nevertheless, it is also possible to produce a polyphenol rich extract directly from a permeated from a soapbark tree. Thus, an affordable product can be obtained. The main advantage of this invention is the incorporation of antioxidant extracts from soapbark tree polyphenols applied to meat products which results in a benefit not only for the improved life span of meat but it would also reduce waste material from the soap bark tree industry according to international regulations on clean production matters.

### Detailed description of the invention

The composition of the invention is formulated from a soapbark tree extract, clearly of natural origin, hydrosoluble that has an antioxidant capacity on different kinds of meat. Preferably, but not exclusively, the composition of the invention is obtained from a soapbark tree extract, rich in saponins, polyphenols and polysacharids. As a point of interest, the soapbark tree extract which is rich in polyphenols and polysacharids used in the composition formulation may correspond to a product from a permeated from which saponins are previously extracted, then, the saponin free fraction rich in polyphenols is purified to obtain the aforementioned extract. Thus, the composition may eventually have a small quantity of saponins that, as a whole, sinergically give the composition a high antioxidant capacity.

A preferred way to carry out the invention is to have the composition as a liquid formulation, rich in polyphenols from a soapbark tree permeated. Such composition is formulated as follows:
Concentrations of solids: 35 - 45 %
Water: 55 - 65 %
Total Phenols: Between 1.4 - 5.4 %
Polysacharids: Between 3.5 -15.8 %

The antioxidant capacity of this liquid composition will be given by the percentage of inhibition of DPPH using 0.2 phenol of soap bark tree / 1 mol of DPPH : between 50-90%. In this way, in the tests carried out, 6 to 28 g. of the product may achieve a 75% of inhibition of 1mmol of DPPH. In another preferred way of carrying out the invention, the composition is formulated as a powder, also rich in polyphenols, and which has the following characteristics:
Total phenols: Between 4 -12 %
Polysacharids: Between 10 - 35 %
Antioxidant Capacity: % Inhibition of DPPH using 0.2 mols of soapbark tree phenol / 1 mol of DPPH: Between 50 - 90 %. In this way, in tests carried out with 3 - 10 g of the product, a 75 % inhibition of 1mmol of DPPH can be achieved.

In case of the product being powder, the humidity level is less than 8% w/w.

As can be seen, the quantity of polyphenols in both the liquid and powder compositions is variable depending on the antioxidant capacity desired and the specific formulation of the product.

As an example, an extract of soapbark tree polyphenols was applied to a marinated chicken leg and breast. The extract was dissolved without problems and different concentrations could be tested, including concentrations around the upper level. The application was carried out by means of a brine with doses which ranged between 0.05 and 0.15% of dissolution. The tests carried out on base line lipoperoxidation and susceptibility to lipoperoxidation show that the dose with the most oxidative protection was the dose of 0.15 % of the extract into the marinade. Additionally, a sense test was carried out on the chicken meat treated with soapbark tree extracts.

Base line lipoperoxidation corresponds to the quantification of meat fat oxidation process in conditions where no treatment has been conducted apart from the addition of protective extracts. The induced lipoperoxidation corresponds to the measurement of the oxidation in pro-oxidant conditions. Two treatments were considered in the aforementioned example : (1) the exposure of the samples at 37° C for 20 minutes and (2) the exposure of the samples at 37° C for 20 minutes after adding 10 Mm of iron to the marinade (an oxidation accelerating additive).

An application of an extract of barksoap tree polyphenols applied to a chicken leg which demonstrates the aforementioned results is shown on Table 1. We can then conclude that the control is only manifested significantly greater after 6 days of refrigeration for the base-line lipoperoxidation.

The lipoperoxidation induced by temperature, and by temperature plus iron is significantly greater in the control than in the meat treated with different concentrations of the extract of barksoap tree polyphenols.

**Table 1: Results of the application of the extract of barksoap tree polyphenols to chicken legs.**

| A.- Base line lipoperoxidation | | | | | | |
|---|---|---|---|---|---|---|
| | DO/g of tissue | | | | | |
| Ref. days | Concentration (%) | | | | | |
| | 0 | 0.05 | 0.1 | 0.15 | 0.2 | Ave. |
| 0 | 0.056^{A} | 0.021^{A} | 0.039^{A} | 0.037^{A} | 0.053^{A} | |
| 2 | 0.147^{A} | 0.068^{A} | 0.053^{A} | 0.077^{A} | 0.112^{A} | |
| 4 | 0.092 ^{A} | 0.135^{A} | 0.087^{A} | 0.089^{A} | 0.083^{A} | |
| 6 | 0.187 ^{A} | 0.082^{B} | 0.319^{A} | 0.166^{AB} | 0.258^{A} | |
| 8 | 0.220 ^{A} | 0.208 ^{A} | 0.336 ^{A} | 0.136 ^{A} | 0.280^{A} | |
| Ave. | | | | | | |

| B.- Lipoperoxidation Induced by Temperature (incubation at 37°C) | | | | | | |
|---|---|---|---|---|---|---|
| | DO/g of tissue | | | | | |
| | Concentration (%) | | | | | |
| Ref. days | 0 | 0.05 | 0.1 | 0.15 | 0.2 | Ave. |
| 0 | 0.149^{A} | 0.029^{A} | 0.047^{A} | 0.077^{A} | 0.072^{A} | |
| 2 | 0.426^{A} | 0.171^{AB} | 0.095^{A} | 0.226 ^{A} | 0.355^{A} | |
| 4 | 0.450^{A} | 0.168^{AB} | 0.209 ^{AB} | 0.102 ^{B} | 0.091^{B} | |
| 6 | 0.849^{A} | 0.105^{BC} | 0.485 ^{B} | 0.245 ^{BC} | 0.311 ^{BC} | |
| 8 | 0.316^{A} | 0.316 ^{A} | 0.222^{A} | 0.195 ^{A} | 0.385 ^{A} | |
| Ave. | | | | | | |
| | | | | | | |

| C.- Lipoperoxidation Induced by Temperature and Iron (incubation at 37°C) | | | | | | |
|---|---|---|---|---|---|---|
| | DO/g of tissue | | | | | |
| | Concentration (%) | | | | | |
| Ref. days | 0 | 0.05 | 0.1 | 0.15 | 0.2 | Ave. |
| 0 | 0.594 | 0.043 | 0.185 | 0.263 | 0.223 | 0.261 ^{b} |
| 2 | 1.031 | 0.534 | 0.213 | 0.537 | 0.816 | 0.626 ^{a} |
| 4 | 0.388 | 0.210 | 0.094 | 0.160 | 0.210 | 0.212 ^{b} |
| 6 | 1.073 | 0.162 | 0.523 | 0.276 | 0.613 | 0.529 ^{a} |
| 8 | 0.779 | 0.382 | 0.613 | 0.329 | 0.654 | 0.551 ^{a} |
| Ave. | 0.773 ^{A} | 0.266 ^{B} | 0.326 ^{B} | 0.313 ^{B} | 0.603 ^{B} | |

| | | | | | | |
|---|---|---|---|---|---|---|
| Note: Ref. Days: The cuts of marinated chicken legs with different brines with 0 (control), 0.05%, 0.1%, 0.15% and 0.2% concentration of the extract of barksoap tree polyphenols are refrigerated for 0, 2, 4, 6 and 8 days at 6°C refrigerating temperature, and then immediately frozen at -80°C to be subject to basal and induced lipoperoxidation analysis. The protocol analysis is in accordance with the literature. DO/g of tissue: the absorbance measurement indicates the optic density at 532 nanometres per gram of oxygen of a homogenized tissue solution (chicken leg). A greater value shows greater oxidation (and therefore less protection of the meat). | | | | | | |

The results of the application of the extract of barksoap tree polyphenols on chicken breasts are shown on Table 2. In this case, the control is significantly greater at all concentrations and for all the refrigeration times for the base-line lipoperoxidation, that is to say, the extract protected the meat in all cases.

No important differences for the different concentrations in the lipoperoxidation induced by temperature were shown.

The lipoperoxidation induced by temperature plus iron, although always greater, shows statistic significancy on days 0 and 2 of refrigeration. In this analysis, the greater concentration of barksoap tree polyphenols (0.2%) showed a pro-oxidant effect after 2 days of refrigeration.

**Table 2: Results of the application of the extract of barksoap tree polyphenols on chicken breasts.**

| A.- Base line lipoperoxidation | | | | | | |
|---|---|---|---|---|---|---|
| | DO/g of tissue | | | | | |
| | Concentration (%) | | | | | |
| Ref. days | 0 | 0.05 | 0.1 | 0.15 | 0.2 | Ave. |
| 0 | 0.085 | 0.018 | 0.035 | 0.020 | 0.042 | 0.040^{b} |
| 2 | 0.110 | 0.029 | 0.040 | 0.038 | 0.076 | 0.058^{ab} |
| 4 | 0.113 | 0.062 | 0.040 | 0.063 | 0.064 | 0.066^{ab} |
| 6 | 0.144 | 0.070 | 0.047 | 0.060 | 0.102 | 0.084 ^{a} |
| 8 | 0.106 | 0.096 | 0.120 | 0.055 | 0.083 | 0.091 ^{a} |
| Ave. | 0.112^{A} | 0.055 ^{B} | 0.056 ^{B} | 0.045 ^{B} | 0074 ^{B} | |
| | | | | | | |

| B.-Lipoperoxidation induced by Temperature (incubation at 37°C) | | | | | | |
|---|---|---|---|---|---|---|
| | DO/g of tissue | | | | | |
| | Concentration (%) | | | | | |
| Ref. days | 0 | 0.05 | 0.1 | 0.15 | 0.2 | Ave. |
| 0 | 0.077 | 0.040 | 0.060 | 0.034 | 0.051 | 0.052 ^{c} |
| 2 | 0.119 | 0.107 | 0.093 | 0.060 | 0.178 | 0.111 ^{a} |
| 4 | 0.117 | 0.087 | 0.065 | 0.097 | 0.103 | 0.093 ^{ab} |
| 6 | 0.083 | 0.064 | 0.065 | 0.075 | 0.052 | 0.067 ^{bc} |
| 8 | 0.158 | 0.141 | 0.094 | 0.107 | 0.096 | 0.119 ^{a} |
| Ave. | 0.111 ^{A} | 0.088 ^{A} | 0.075 ^{A} | 0.075 ^{A} | 0.096 ^{A} | |
| | | | | | | |

| C.- Lipoperoxidation Induced by Temperature and Iron (incubation at 37°C) | | | | | | |
|---|---|---|---|---|---|---|
| | DO/g of tissue | | | | | |
| | Concentration (%) | | | | | |
| Ref. days | 0 | 0.05 | 0.1 | 0.15 | 0.2 | Ave. |
| 0 | 2.427 ^{A} | 0.205 ^{B} | 0.320 ^{A} | 0.323 ^{B} | 0.348 ^{B} | |
| 2 | 1.669 ^{A} | 1.395 ^{AB} | 0.410 ^{B} | 0.460 ^{B} | 2.179 ^{A} | |
| 4 | 0.967 ^{A} | 0.127 ^{A} | 0.203 ^{A} | 0.415 ^{A} | 0.578 ^{A} | |
| 6 | 0.129 ^{A} | 0.101 ^{A} | 0.133 ^{A} | 0.103 ^{A} | 1.024 ^{A} | |
| 8 | 0.354 ^{A} | 0.189 ^{A} | 0.071 ^{A} | 0.165^{A} | 0.140 ^{A} | |
| Ave. | | | | | | |

| | | | | | | |
|---|---|---|---|---|---|---|
| Note: Ref. Days: The cuts of marinated chicken legs with different brines with 0 (control), 0.05%, 0.1%, 0.15% and 0.2% concentrations of the extract of barksoap tree polyphenols, are refrigerated for 0, 2, 4, 6 and 8 days at 6°C refrigerating temperature, and then immediately frozen at -80°C to be subject to basal and induced lipoperoxidation analysis. The protocol analysis is in accordance with the literature. DO/g of tissue: the absorbance measurement indicates the optic density at 532 nanometres per gram of oxygen of a homogenized tissue solution (chicken breast). Greater value shows greater oxidation (and therefore less protection of the meat). | | | | | | |

With respect to an analysis of the sense test carried out, it is concluded that, in both cases, legs or breasts, the samples are well preserved until the 6th day of refrigeration and the best samples corresponded to the 0.05% and 0.10% doses.

## Claims

1. A composition for favouring the preservation of meat food, preferably through an antioxidant effect, comprising a barksoap tree extract, preferably from barksoap tree polyphenols and polysaccharides, wherein a small part of saponins may be included.

2. The composition for favouring the preservation of meat food of claim 1, wherein the composition is formulated as a liquid form comprising:
a) a concentration of solids between 35 to 45%
b) water between 55 and 65%
c) total phenols between 1.4 and 5.4%, and
d) polysacharids between 3.5 and 15.8%

3. The composition for favouring the preservation of meat food of claim 1, wherein the composition is formulated as a powder comprising:
a) total phenols between 4 and 12%
b) polysacharids between 10 and 35%

4. The composition for favouring the preservation of meat food of claim 3, wherein the composition comprises a humidity level lower than 8% weight/weight.

5. A method for favouring the preservation of meat food, preferably through an antioxidant effect, comprising applying a barksoap tree extract to a meat product, preferably the extract of barksoap tree polyphenols.

6. A method for favouring the preservation of meat food of claim 5, wherein said extract of barksoap tree is applied through a liquid formulation.

7. A method for favouring the preservation of meat food of claim 6, wherein said liquid formulation comprises:
a) a concentration of solids between 35 to 45%
b) water between 55 and 65%
c) total phenols between 1.4 and 5.4%, and
d) polysacharids between 3.5 and 15.8%

8. A method for favouring the preservation of meat food of claim 5, wherein said barksoap tree extract is applied through a powder formulation comprising:
c) total phenols between 4 and 12%
d) polysacharids between 10 and 35%

9. A method for favouring the preservation of meat food of claim 8, wherein said powder formulation comprises less than 8% humidity weight/weight.

10. Use of a composition based on barksoap tree extract, preferably barksoap tree polyphenols, useful as an antioxidant when applied on meat food.
